# EUROPÄISCHE PATENTSCHRIFT

(11) **EP 1 801 410 B1**
(45) Veröffentlichungstag und Bekanntmachung des Hinweises auf die Patenterteilung: **30.12.2009**
(21) Anmeldenummer: 07104186.7
(22) Anmeldetag: 02.10.2003
(51) Int. Cl.: F02M 51/06, F02M 61/18

(54) **Ventil zum Steuern eines Fluids**
Valve for control of a fluid
Soupape de commande d'un fluide

(30) Priorität: 26.10.2002 DE 10249963; 05.05.2003 DE 10319920
(43) Veröffentlichungstag der Anmeldung: 27.06.2007
(62) Teilanmeldung aus: 03773481.1
(73) Patentinhaber: ROBERT BOSCH GMBH, 70442 Stuttgart (DE)
(72) Erfinder: Hafner, Udo, 71638, Ludwigsburg (DE); Hans, Waldemar, 96050, Bamberg (DE); Brenner, Frank, 71686, Remseck (DE); Miller, Frank, 74360, Ilsfeld (DE); Bantleon, Guenther, 71229, Leonberg (DE); Nguyen-Schaeffer, Thanh-Hung, 71679, Asperg (DE); Vogel, Christof, 96120, Bischberg (DE); Krapp, Norbert, 96146, Altendorf (DE)

(56) Entgegenhaltungen:
- WO-A-88/04727
- DE-A1- 19 523 915
- US-A1- 2002 030 123

## Beschreibung

### Stand der Technik

Die Erfindung geht von einem Ventil zum Steuern eines Fluids gemäß der im Oberbegriff des Patentanspruches 1 näher definierten Art aus.

Ein derartiges Ventil ist aus der Praxis bekannt und beispielsweise als Einspritzventil bei einem Verbrennungsmotor eines Kraftfahrzeuges oder auch als Gassteuerventil bei einer Brennstoffzelle einsetzbar.

Das bekannte Ventil umfaßt ein Ventilgehäuse, in dem ein Ventilschließglied axial verschieblich geführt ist, das mit einer elektromagnetischen Betätigungseinheit in Wirkverbindung steht. Das Ventilschließglied dient zur Steuerung eines Fluidstroms von einer Zuströmseite zu einer Abströmseite und wirkt hierzu mit einem Ventilsitz zusammen. Die Zuströmseite des Ventils ist mit einem das Ventilschließglied umgebenden Druckbereich verbunden. Beim Öffnen des Ventilschließglieds erfolgt ein Fluidstrom von diesem Druckbereich durch eine Öffnung einer Ventilplatte in Richtung der Abströmseite des Ventils.

Bei einem als Kraftstoffeinspritzventil einer Brennkraftmaschine ausgebildeten Ventil hat das Ventilschließglied an seiner Stirnseite einen kugelförmigen, aus einem Vollmaterial hergestellten Schließkörper, der mit einem aus einem Drehteil hergestellten Kegelsitz zusammenwirkt. Dem Kegelsitz ist eine Ventilplatte nachgeordnet, die eine sogenannte Spritzlochscheibe darstellt, über die der Kraftstoff bzw. das Benzin in einen Brennraum der Brennkraftmaschine eingesprüht wird. Zwischen dem Ventilsitz und der Spritzlochscheibe liegt hierbei ein Totvolumen vor, das bisweilen einer guten Zerstäubung des Kraftstoffes entgegenwirken kann. Das Totvolumen zwischen dem Dichtsitz und der Spritzlochscheibe führt des weiteren zu einer schlechten Ventildynamik und einer ungewünschten Verdampfung des Kraftstoffes in einem Saugrohr, in dem das Ventil in der Regel angeordnet ist. Ferner sind zum Öffnen des Ventilschließglieds große Kräfte erforderlich, da eine große Differenz zwischen dem Druck, der in dem das Ventilschließglied umgebenden Druckbereich herrscht, und dem an der Stirnseite des Ventilschließglieds angreifenden Druck vorliegt.

Bei einem als Gasventil ausgebildeten Ventil ist an der Stirnseite des Ventilschließglieds üblicherweise ein Dichtbund ausgebildet, der bei geschlossenem Ventilschließglied auf eine Dichtplatte aufsetzt und eine zylindrische Bohrung der Dichtplatte umgibt. Die Bohrung führt zu einem Totvolumenraum der Dichtplatte, dem eine Düse nachgeordnet ist, die zu der Abströmseite führt. Wie auch bei dem Benzineinspritzventil herrscht bei geschlossenem Ventilschließglied zwischen dem das Ventilschließglied umgebenden Druckbereich und dem an die Stirnseite des Ventilschließglieds grenzenden Ventilraum eine große Druckdifferenz, so daß die zum Öffnen des Ventilschließglieds erforderliche Magnetkraft groß ausgelegt sein muß.

Ferner haben Gase, wie Wasserstoff oder Methan, im Vergleich zu flüssigen Kraftstoffen eine geringere Dichte. Daher ist bei Gasen häufig ein wesentlich größerer Volumenstrom erforderlich, so daß insbesondere bei einem Gasventil eine große Durchstromfläche am Ventildichtsitz wünschenswert ist. Hierbei ist zu beachten, daß der Ventilhub wegen der hohen Dynamik des Ventils begrenzt ist, was zur Folge hat, daß der Dichtsitz im wesentlichen hinsichtlich seines Durchmessers veränderbar ist. Eine Vergrößerung des Dichtsitzes führt aber zu einer Erhöhung der aufzubringenden Öffnungskraft bzw. Magnetkraft, was wiederum einen erhöhten Stromverbrauch zur Folge hat. Ferner kann der Durchmesser des Dichtsitzes aufgrund eines häufig beschränkten Bauraums nicht beliebig groß gewählt werden. Die Volumenströme bzw. die Massenströme des strömenden Gases sind aus diesen Gründen häufig nicht hinreichend groß für die bei Gasmotoren und Brennstoffzellenantrieben herrschenden Anforderungen.

### Vorteile der Erfindung

Das Ventil gemäß der Erfindung mit den Merkmalen nach dem Oberbegriff des Patentanspruches 1, bei dem an der Ventilplatte Düsen ausgebildet sind, die zu der Abströmseite führen und die mittels des Ventilschließglieds verschließbar sind, hat bei Auslegung als Flüssigkeitsventil, insbesondere als Kraftstoffeinspritzventil, den Vorteil, daß zwischen der beispielsweise aus einer Spritzlochscheibe gebildeten Ventilplatte und dem Dichtsitz kein Totvolumen vorliegt, was gegenüber einem Ventil mit einem kugelförmigen Schließkörper zu einer besseren Zerstäubung der gesteuerten Flüssigkeit führt. Ohne Totvolumen liegt ein gleichmäßiges Tropfenspektrum während des gesamten Einspritzverlaufs vor.

Auch kann der sogenannte Dynamic Flow Range beim Öffnen und beim Schließen des Ventilschließglieds linear gehalten werden, was sich hinsichtlich der Leistung des Ventils ebenfalls als vorteilhaft erweist.

Ferner ist der effektive Hub des Ventilschließglieds durch die Ausbildung des Ventilsitzes als Flachsitz identisch mit dem tatsächlichen Hub des Ventilschließglieds. Auch tritt keine sogenannte Quetschfilmströmung an dem als Flachsitz ausgebildeten Ventilsitz auf. Des weiteren kann durch das Fehlen eines aus einem Vollmaterial hergestellten, kugelförmigen Schließkörpers ein geringeres Gewicht des Ventilschließglieds erreicht werden, so daß geringere Kräfte zum Öffnen des Ventils aufgebracht werden müssen. Damit erhöht sich die Dynamik des Ventils.

Die Ausbildung der Ventilplatte mit mehreren Düsen geringen Durchmessers hat den Vorteil einer feinen Zerstäubung der gesteuerten Flüssigkeit.

Der Begriff Fluid ist im vorliegenden Fall in seiner weitesten Bedeutung zu verstehen. Das Fluid kann mithin sowohl eine Flüssigkeit als auch ein Gas darstellen.

Bei einer Ausbildung des Ventils nach der Erfindung als Gasventil kann auf eine der Ventilplatte nachgeschaltete Düse und damit auch auf einen stromab der Ventilplatte angeordneten Totvolumenraum verzichtet werden. Das Fehlen eines Totvolumens stromab der Dichtplatte führt gegenüber dem oben beschriebenen, bekannten Gasventil zu einer erhöhten Ventildynamik. Die Ausbildung der Düsen an der Dichtplatte hat des weiteren gegenüber einer Dichtplatte mit einer nachgeschalteten Düse den Vorteil, daß eine geringere Kraft zur Betätigung des Ventilschließglieds erforderlich ist.

Das Ventil nach der Erfindung ist insbesondere als Kraftstoff-Einspritzventil bei einer Brennkraftmaschine eines Kraftfahrzeuges oder auch zur Massenstromregelung von Gasen wie Wasserstoff und Erdgas beispielsweise bei einer Brennstoffzelle oder auch einem Gasmotor einsetzbar.

Die Düsen, die bevorzugt entlang einer Kreislinie angeordnet sind, sind bei einer vorteilhaften, als Gasventil ausgelegten Ausführungsform des Ventils zur Verbesserung des Strömungsverhaltens des Gases in der Düse jeweils mit einer abgerundeten Einströmkante versehen.

Bei einem als Kraftstoffeinspritzventil ausgelegten Ventil ist es vorteilhaft, wenn die Düsen jeweils eine scharfe Einströmkante haben und sich in Abströmrichtung kontinuierlich aufweiten, wobei die Wandung der Düsen vorzugsweise einen gewölbten Längsschnitt hat. Insbesondere mit einer derartigen Formgebung läßt sich eine große Schergeschwindigkeit bei der zu steuernden Flüssigkeit erreichen, was zu einer feinen Zerstäubung der Flüssigkeit in den Düsen führt.

Alternativ ist es bei einem Flüssigkeitsventil auch denkbar, daß sich die Düsen jeweils in Strömungsrichtung trichterförmig verjüngen, wobei die Wandung der Düsen auch in diesem Falle einen gewölbten Längsschnitt haben kann.

Bei der Auslegung des Ventils als Kraftstoffeinspritzventil können die Düsen mit einem geringeren Durchmesser ausgelegt sein als bei der Steuerung eines Gases. Bei der Steuerung von Benzin liegt der Durchmesser der Düsen beispielsweise bei 90 µm. Bei der Steuerung eines Gases liegt der Durchmesser beispielsweise im Bereich von etwa 500 µm. Grundsätzlich wird der Massenstrom in dem Ventil durch die Düsenflächen bestimmt. So kann das Ventil nach der Erfindung durch einfaches Anpassen der Düsenanzahl mittels Einbau einer Ventilplatte mit entsprechender Düsenzahl als Einspritzventil für unterschiedliche Brennkraftmaschinen mit einem unterschiedlichen Kraftstoffbedarf eingesetzt werden. Es ist also bei einem neuen Anwendungsfall nur erforderlich, die als Spritzlochscheibe (SLS) ausgelegte Ventilplatte entsprechend zu modifizieren.

Um bei einem Gasventil das aufgrund des Druckstoßes bei der Betätigung des Ventilschließglieds entstehende Geräusch zu reduzieren, können hier die Düsen in einen Ringkanal münden, der an der dem Ventilschließglied abgewandten Seite der Ventilplatte angeordnet ist. Die Breite des Ringkanals ist vorzugsweise so gewählt, daß sie etwa das Zwei- bis Dreifache des Düsendurchmessers beträgt.

Ein besonders guter Wirkungsgrad hinsichtlich des Strömungsverhaltens des Gases in den Düsen kann erreicht werden, wenn die Höhe des Ringkanals so ausgelegt ist, daß jeweils das Verhältnis der Länge der Düse zu ihrem Durchmesser etwa 0,7 bis 1 beträgt.

Um die Strömungsablösung an der Düseneinströmkante zu reduzieren, kann insbesondere bei einem als Gasventil ausgelegten Ventil nach der Erfindung eine Abrundung der Düseneinströmkante mit einem Krümmungsradius von beispielsweise 0,050 mm vorgesehen sein.

Eine bevorzugte Ausführungsform des Ventils nach der Erfindung arbeitet nach dem sogenannten Druckausgleichsprinzip. Dies kann dadurch erreicht werden, daß die Zuströmseite stromab mit einem inneren und einem äußeren Druckbereich verbunden ist, welche Druckbereiche stromauf des Ventilsitzes angeordnet sind. Der innere Druckbereich umfaßt einen axialen Druckkanal des Ventilschließglieds, der an der freien Stirnseite des Ventilschließglieds austritt. Der äußere Druckbereich umgibt das Ventilschließglied.

Bei einem derartigen Ventil ist das Ventilschließglied, das stirnseitig eine als Ringfläche ausgebildete, die mit den Düsen zusammenwirkende Dichtfläche aufweisen kann, mit geringem Kraftaufwand betätigbar, da bei dessen Öffnen in dem inneren und dem äußeren Druckbereich im wesentlichen der gleiche Druck herrscht und das Fluid aus beiden Druckbereichen in Richtung der Düsen strömt. Dies hat den Vorteil, daß eine insbesondere elektromagnetische Betätigungseinheit mit geringer Leistung auslegbar ist. Auch läßt ein derartiges Ventil hohe Massenströme zu, da das Fluid sowohl von dem inneren Duckbereich als auch von dem äußeren Druckbereich aus in die Düsen einströmt.

Der innere Druckbereich und der äußere Druckbereich können über mindestens einen in dem Ventilschließglied ausgebildeten Abströmkanal verbunden sein. Der Abströmkanal kann als im wesentlichen radial ausgerichtete Bohrung des Ventilschließglieds ausgebildet sein, er kann aber auch mit einem bestimmten Anstellwinkel in Strömungsrichtung gegenüber der Längsachse des Ventilschließglieds geneigt sein und von einer als Zufuhrkanal dienenden, axialen Bohrung an die Außenseite des Ventilschließglieds führen. Der Zufuhrkanal mündet dann auch in eine axiale Bohrung gegebenenfalls verminderten Durchmessers, die den inneren Druckbereich darstellt bzw. ein Teil dessen ist.

Bei einem als Flüssigkeitsventil, beispielsweise als Kraftstoffeinspritzventil, ausgelegten Ventil liegt der Hub des Ventilschließglieds vorzugsweise im Bereich zwischen 60 µm und 90 µm, wobei in dem inneren und dem äußeren Druckbereich ein Druck von beispielsweise 3 bar bis 4 bar herrschen kann. Wenn sehr kleine Tropfen erzeugt werden sollen, d. h. wenn der sogenannte Sauter Mean Diameter (SMD) sehr klein ist, kann der Druck auch zwischen 10 und 20 bar liegen. Die erforderliche Öffnungskraft ist hierbei wesentlich kleiner als bei bisher bekannten Ventilen, da eine kleine Druckfläche vorliegt.

Bei einem als Gasventil ausgelegten Ventil beträgt der Hub des Ventilschließglieds vorzugsweise etwa 300 µm, wobei der in dem inneren Druckbereich und dem äußeren Druckbereich herrschende Gasdruck bei etwa 8 bar liegt.

Die Ventilplatte bzw. Spritzlochplatte des Ventils nach der Erfindung kann aus unterschiedlichen Materialien, wie beispielsweise Stahl, PEEK mit Kohlefasern, einem Hartkunststoff oder einer Keramik, hergestellt sein, und zwar beispielsweise nach einem Ätz-, einem Erodier- oder einem Laserverfahren.

Das Ventil nach der Erfindung kann zur Dichtigkeitserhöhung im Bereich des Ventilsitzes mindestens ein Dichtelement umfassen. Dieses ist zweckmäßig an der Dichtfläche an der Stirnseite des Ventilschließglieds angeordnet und kann eine oder auch mehrere Dichtlippen aufweisen. Das Dichtelement kann aus unterschiedlichen Materialien bestehen. So ist das Dichtelement beispielsweise zur Steuerung einer Flüssigkeit entweder aus einem Metall, beispielsweise aus gehärtetem Stahl, oder auch aus einem Elastomer gebildet, das aus Fluorkohlenstoff-Kautschuk oder Viton bestehen kann.

Bei der Steuerung eines Gases ist es vorteilhaft, das Dichtelement aus einem Elastomer zu bilden. Bei einer Ausbildung des Dichtelements aus einem Elastomer verringern sich des weiteren die auftretenden Prallkräfte, was wiederum zu einer verringerten Geräuschentwicklung führt. Eine Ausbildung des Dichtelements aus einem geeigneten Metall kann insbesondere erforderlich sein, wenn bei einem Elastomer eine zu starke Quellung zu erwarten wäre.

Das Dichtelement kann ringförmig ausgebildet und an dem Ventilschließglied an dessen Stirnseite in einer korrespondierenden Ringnut eingebettet sein. Es kann mit zwei Dichtlippen versehen sein, von denen eine am inneren Rand des Dichtrings angeordnet und damit dem inneren Druckbereich zugeordnet und die andere am äußeren Rand des Dichtrings angeordnet und damit dem äußeren Druckbereich zugeordnet ist.

Denkbar ist es auch, für jede der Düsen eine kreisförmige Elastomerdichtscheibe vorzusehen.

Des weiteren kann das Ventil nach der Erfindung einen als Anschlag für das Ventilschließglied dienenden Sockel aufweisen. Dieser ist beispielsweise an der Ventilplatte ausgebildet. Der Anschlag stellt einen Prallabfänger dar und begrenzt die Verformung des beispielsweise elastomeren Dichtelements und damit dessen Verschleiß und definiert den Luftspalt an einem zur Betätigung des Ventilschließglieds dienenden Magnetanker eindeutig. Bei einem in einer Nut eingebetteten Dichtring mit Dichtlippen ist es denkbar, daß das Ventilschließglied selbst einen Schutzring bzw.

Prallabfänger zur Schonung des Dichtrings bildet.

Um in der Schließstellung des Ventilschließglieds eine hohe Dichtigkeit zu gewährleisten, können an der Ventilplatte auch Schürzen zur Auflage des Dichtelements ausgebildet sein. Diese Schürzen bilden beispielsweise die Ränder der Düsen.

Weitere Vorteile und vorteilhafte Ausgestaltungen des Gegenstandes nach der Erfindung sind der Beschreibung, der Zeichnung und den Patentansprüchen entnehmbar.

### Zeichnung

Fünf Ausführungsbeispiele eines Ventils nach der Erfindung sind in der Zeichnung schematisch vereinfacht dargestellt und werden in der nachfolgenden Beschreibung näher erläutert. Es zeigen
Figur 1 einen vereinfachten Längsschnitt durch ein Kraftstoffeinspritzventil gemäß der Erfindung;
Figur 2 eine vergrößerte Darstellung des Bereichs II in Figur 1;
Figur 3 eine ausschnittsweise Darstellung einer zweiten Ausführungsform eines erfindungsgemäßen Kraftstoffeinspritzventils;
Figur 4 einen vereinfachten Längsschnitt durch eine Düse eines Kraftstoffeinspritzventils;
Figur 5 eine alternative Ausführung einer Düse in einem vereinfachten Längsschnitt;
Figur 6 einen schematischen Schnitt durch ein Gasventil gemäß der Erfindung mit einer Düsenplatte in einer ausschnittsweisen, perspektivischen Darstellung;
Figur 7 eine Aufsicht auf die Düsenplatte des Gasventils nach Figur 6;
Figur 8 eine ausschnittsweise geschnittene Ansicht einer alternative Ausführungsform eines Gasventils mit einer Düsenplatte;
Figur 9 einen vereinfachten Längsschnitt durch einen Dichtbereich des Gasventils nach Figur 8 in einer vergrößerten Darstellung; und
Figur 10 eine Figur 9 entsprechende Ansicht, jedoch mit einem veränderten Dichtbereich.

### Beschreibung der Ausführungsbeispiele

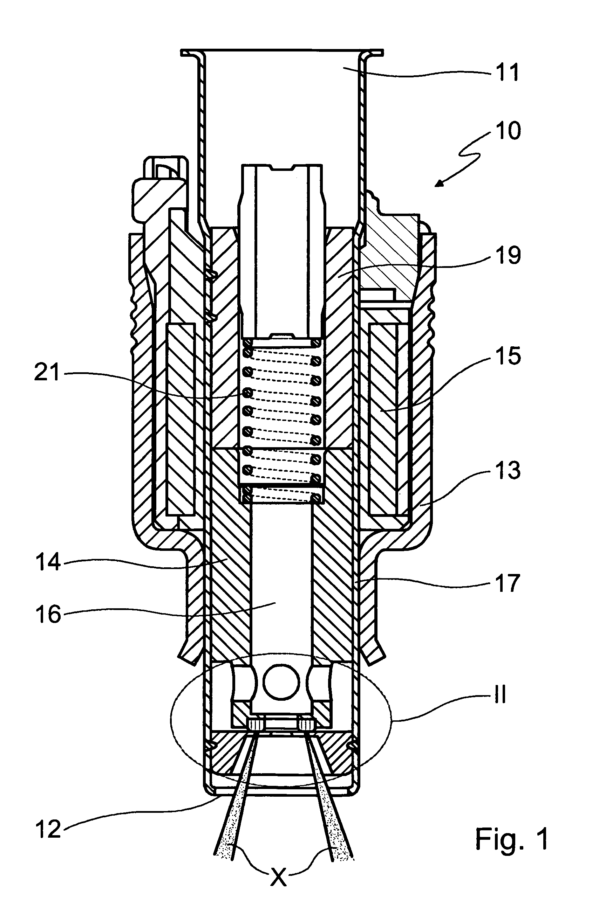

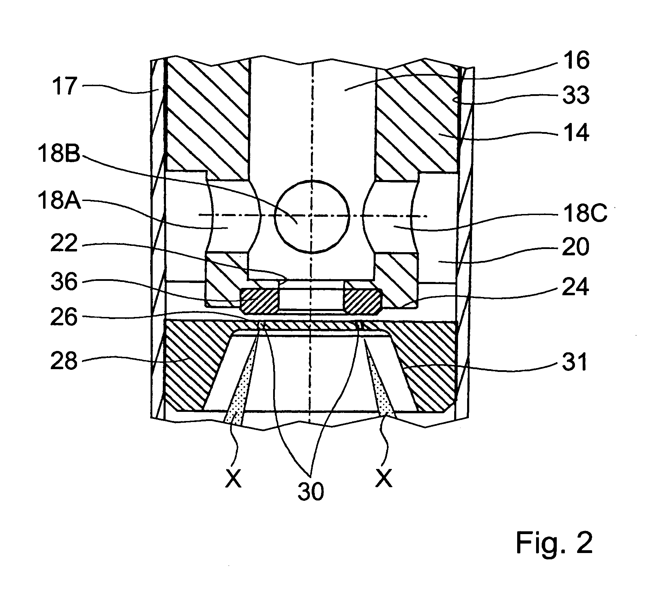

In den Figuren 1 und 2 ist ein Kraftstoffeinspritzventil 10 zum Einsatz bei einer Brennkraftmaschine eines hier nicht näher dargestellten Kraftfahrzeuges dargestellt, das zur Steuerung eines Kraftstoffstroms von einer Zuströmseite 11 zu einer Abströmseite 12 dient, wobei der Kraftstoff an der Abströmseite 12 in zerstäubter Form austritt, wie anhand der punktierten Bereiche X in der Zeichnung angedeutet ist.

Das Einspritzventil 10 umfaßt ein mehrteiliges Gehäuse 13, in welchem eine Magnetspule 15 angeordnet ist, die eine tiefgezogene Führungshülse 17 umgreift. In der Führungshülse 17 ist ein im wesentlichen rohrförmiger Stopfen 19 fixiert, der zur Aufnahme einer als Vorspannfeder wirkenden Spiralfeder 21 dient, an deren der Zuströmseite 11 abgewandten Seite ein Magnetanker 14 anliegt, der in der Führungshülse 17 axial verschiebbar geführt ist.

Der Magnetanker 14 ist rohrförmig ausgebildet und bildet ein Ventilschließglied, das stirnseitig mit einem einen Flachsitz darstellenden Ventilsitz 26 zusammenwirkt.

Des weiteren umfaßt der Magnetanker 14 bzw. das Ventilschließglied 14 eine als Zufuhrkanal dienende erste Axialbohrung 16, die mit der Zuströmseite 11 des Einspritzventils 10 verbunden ist und einen Innenraum des Ventilschließglieds 14 bildet. Von der ersten Axialbohrung 16 zweigen vier über den Umfang des Ventilschließglieds 14 verteilte Radialbohrungen ab, von denen in der Zeichnung drei Bohrungen 18A, 18B und 18C dargestellt sind und die zu einem sogenannten äußeren Druckbereich 20 führen, der an die Außenseite des Ventilschließglieds 14 grenzt und von der Führungshülse 17 begrenzt ist. In axialer Richtung mündet die erste Axialbohrung 16 in eine zweite Axialbohrung 22, deren Durchmesser geringer als der Durchmesser der ersten Axialbohrung 16 ist und die an der freien Stirnseite 24 des Ventilschließglieds 14 austritt. Die zweite Axialbohrung 22 geringeren Durchmessers, die eine axiale Abströmbohrung darstellt, bildet einen sogenannten inneren Druckbereich bzw. ist Teil desselben.

Beim Öffnen des Ventilschließglieds 14 strömt Kraftstoff aus der ersten Axialbohrung 16 über die vier radialen Abströmbohrungen in den äußeren Druckbereich 20 und über die axiale Abströmbohrung 22 an die freie Stirnseite 24 des Ventilschließglieds 14.

Der innere Druckbereich 22 und der äußere Druckbereich 20 sind stromauf des als Flachsitz ausgebildeten Ventilsitzes 26 angeordnet, der mit der freien Stirnseite 24 des Ventilschließglieds 14 zusammenwirkt und an einer als sogenannte Spritzlochscheibe dienenden Düsenplatte 28 ausgebildet ist, die in der Führungshülse 17 beispielsweise über eine Schweißverbindung fixiert ist. Die Ventilplatte 28 ist aus Stahl gefertigt und auf der Seite des Ventilschließglieds 14 eben.

In der Düsenplatte 28 sind entlang einer Kreislinie beispielsweise zehn gegenüber der Längsachse des Einspritzventils 10 leicht angestellte Düsen bzw. Zumeßbohrungen 30 ausgebildet, die zu einer kegelstumpfförmigen Ausnehmung 31 der Ventilplatte 28 führen. Die Düsen 30 haben vorliegend jeweils einen Durchmesser von etwa 90 µm.

An der Stirnseite 24 des Ventilschließglieds 14 ist ein Dichtring 36 in einer korrespondierenden Ausnehmung des Ventilschließglieds 14 angeordnet. Der Dichtring 36 ist aus Fluorkohlenstoff-Kautschuk gefertigt und hat einen Durchmesser, der mit dem Durchmesser der Kreislinie korrespondiert, entlang der die Düsen 30 derart angeordnet sind, daß der Dichtring 36 die Düsen 30 bei geschlossenem Ventilschließglied 14 verschließt, wobei dann nur die Fläche der Düsen 30 mit Außendruck beaufschlagt ist. Diese Fläche bestimmt die hydraulische Schließkraft des Ventils.

Das Ventilschließglied 14, das etwa einen Hub von 60 µm bis 90 µm hat, ist über die gesamte Länge seiner Mantelfläche 33 in der Führungshülse 17 geführt.

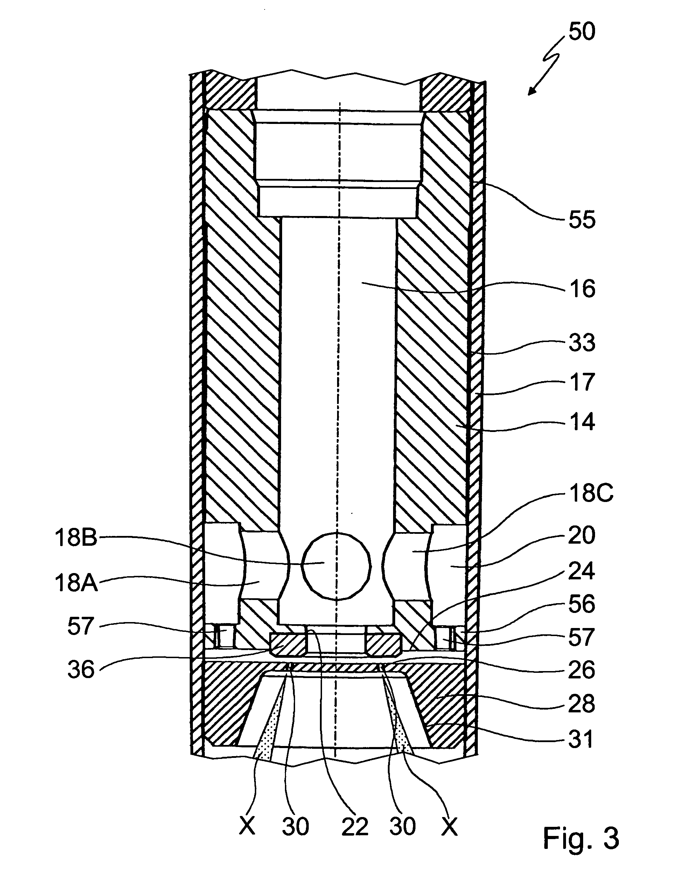

In Figur 3 ist eine alternative Ausführungsform eines Kraftstoffeinspritzventils 50 dargestellt, das weitgehend dem Einspritzventil nach Figur 1 entspricht, sich von diesem aber dadurch unterscheidet, daß der Magnetanker 14 zwei rohr- bzw. ringförmige Führungsbünde 55 und 56 aufweist, über die der Magnetanker 14 in der Führungshülse 17 geführt ist. Der erste Führungsbund 55 ist in einem der Ventilplatte 28 entfernten Bereich der Mantelfläche 33 des Ventilschließglieds 14 angeordnet. Der zweite Führungsbund 56 ist von einem Ringbund gebildet, der eine Stirnseite aufweist, die mit der Stirnfläche 24 des Ventilschließglieds 14 fluchtet. In dem Ringbund 56 sind axiale Bohrungen 57 ausgebildet, die einen Kraftstoffstrom zwischen dem äußeren Druckbereich 20 und den Düsen 30 in der Ventilplatte 28 gewährleisten. Im übrigen entspricht der Aufbau des Ventils 50 demjenigen des Ventils nach Figur 1.

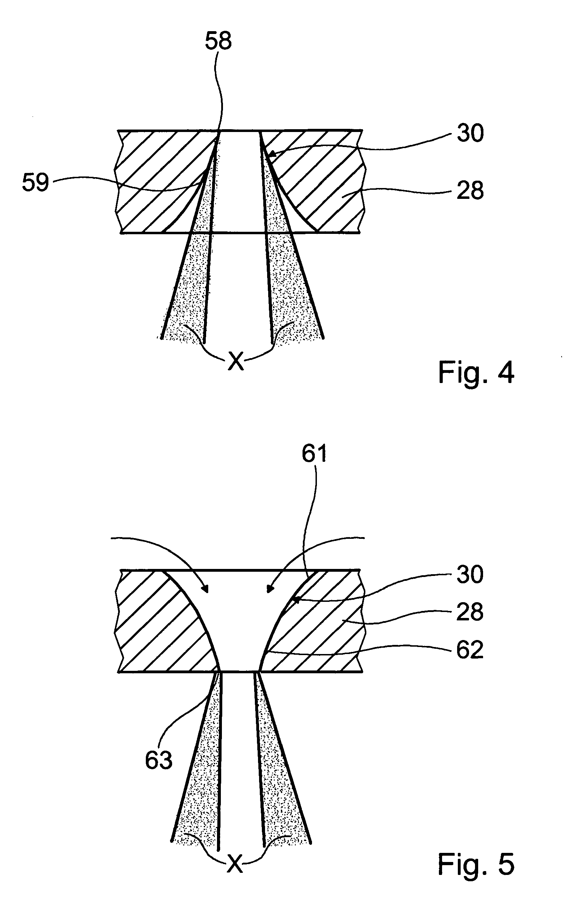

In Figur 4 ist eine Ausbildung einer Düse 30 dargestellt, die eine Ventilplatte bzw. eine Spritzlochscheibe 28 eines Kraftstoffeinspritzventils der in den Figuren 1 bis 3 dargestellten Art durchgreift. Die Düse 30 hat eine scharfe Einströmkante 58 und weitet sich in Strömungsrichtung auf, wobei die Düse 30 eine Wandung 59 hat, deren Längsschnitt gewölbt ist. Bei einer derartigen Düse kann eine große Schergeschwindigkeit des Kraftstoffes erreicht werden, so daß ein gute Zerstäubung vorliegt.

In Figur 5 ist eine alternative Ausführungsform einer Düse 30 einer Spritzlochscheibe 28 zum Einbau in eine Kraftstoffeinspritzventil dargestellt, die eine abgerundete Einströmkante 61 aufweist und die sich in Strömungsrichtung trichterförmig verjüngt, wobei die Düse 30 eine Wandung 62 hat, die einen gewölbten Längsschnitt aufweist. Ferner hat die Düse 30 eine scharfe Ausströmkante 63.

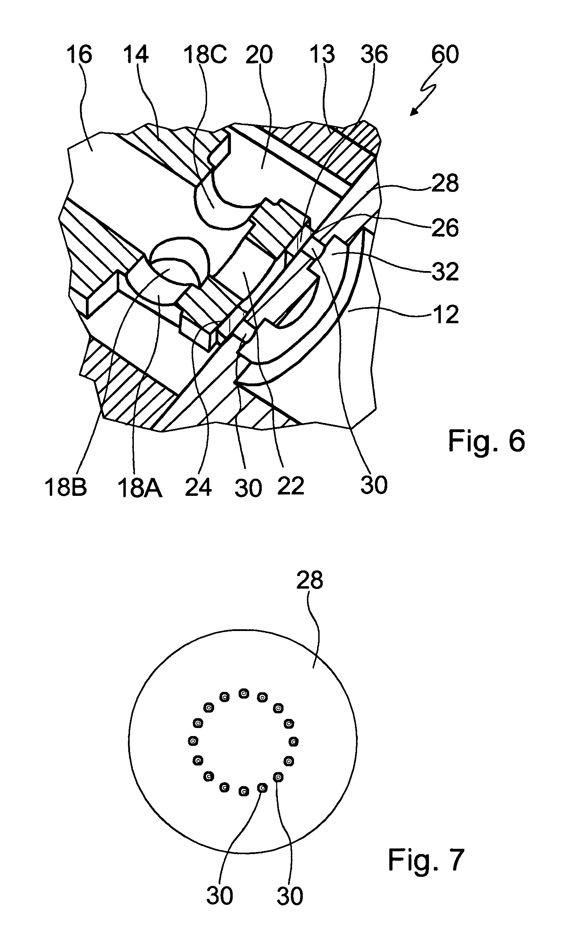

In Figur 6 ist ein Gasventil 60 zum Einsatz bei einer Brennstoffzelle oder bei einem Gasmotor dargestellt, das zur Regelung eines Wasserstoffstroms bzw. eines CNG(Compressed Natural Gases)-Stroms dient und im Aufbau den Ventilen gemäß Figur 1 bis 3 gleicht. Aus Gründen der Übersichtlichkeit werden daher für funktionsgleiche Bauteile die bisherigen Bezugszeichen verwendet.

Das Gasventil 60 umfaßt ein Gehäuse 13, in welchem ein Ventilschließglied 14 in einer langen, von dem Gehäuse 13 gebildeten Führung axial verschieblich geführt ist, das mit einer hier nicht näher dargestellten elektromagnetischen Betätigungseinheit in Wirkverbindung steht und mit einem Gleitlack beschichtet ist.

Das Ventilschließglied 14 umfaßt eine als Zufuhrkanal dienende, erste Axialbohrung 16, die mit einer hier nicht dargestellten Zuströmseite des Gasventils 60 verbunden ist. Von der ersten Axialbohrung 16 zweigen vier über den Umfang des Ventilschließglieds 14 verteilte Radialbohrungen ab, die jeweils eine radiale Abströmbohrung bilden und von denen in Figur 1 drei Bohrungen 18A, 18B, 18C dargestellt sind, welche zu einem an die Außenseite des Ventilschließglieds 14 grenzenden, sogenannten äußeren Druckbereich 20 führen. In axialer Richtung mündet die erste Axialbohrung 16 in eine zweite Axialbohrung 22, deren Durchmesser geringer als der Durchmesser der ersten Axialbohrung 16 ist und die an der freien Stirnseite 24 des Ventilschließglieds 14 austritt. Die zweite Axialbohrung 22 geringeren Durchmessers, die eine axiale Abströmbohrung darstellt, bildet einen sogenannten inneren Druckbereich bzw. ist Teil desselben.

Beim Betrieb des Gasventils 10 strömt Gas aus der ersten Axialbohrung 16 über die radialen Abströmbohrungen 18A, 18B, 18C in den einen Gasraum darstellenden, äußeren Druckbereich 20 und über die axiale Abströmbohrung 22 an die freie Stirnseite 24 des Ventilschließglieds 14.

Sowohl der innere Druckbereich 22 als auch der äußere Druckbereich 20 sind stromauf eines Ventilsitzes 26 angeordnet, der mit der freien Stirnseite 24 des Ventilschließglieds 14 zusammenwirkt und an einer als Dichtplatte bzw. Dichtsitzscheibe dienenden Düsenplatte 28 ausgebildet ist, die mit dem Ventilschließglied 14 zusammenwirkt. Die Düsenplatte 28 des für Gasanwendungen vorgesehenen Ventils 10 hat eine wirksame Dicke, die größer ist als die wirksame Dicke einer Düsenplatte, die für Flüssigkeitsanwendungen vorgesehen ist.

In der Düsenplatte 28 sind, wie Figur 7 zu entnehmen ist, entlang einer Kreislinie im vorliegenden Ausführungsbeispiel vierzehn axial ausgerichtete, als Durchströmöffnungen dienende Düsen 30 ausgebildet, die über eine Ringnut 32 zu einer Abströmseite 12 des Gasventils 60 führen und mit einer abgerundeten Einströmkante versehen sind. Die Düsen 30 sind jeweils so ausgelegt, daß das Verhältnis ihrer Länge zu ihrem Durchmesser etwa 0,7 beträgt. Eine derartige Auslegung bewirkt ein optimales Strömungsverhalten des durch die Düsen 30 strömenden Gases. Alternativ kann auch eine andere Zahl an Düsen vorgesehen sein.

Die Stirnseite 24 des Ventilschließglieds 14 ist als Ringfläche ausgebildet, an der eine aus einem elastomeren Werkstoff gefertigte Ringdichtung 36 eingebettet ist. Die Ringdichtung 36 schließt in Schließstellung des Ventilschließglieds 14 die Düsen 32 ab, so daß ein Gasstrom von den Druckbereichen 20 und 22 zu der Abströmseite 12 gesperrt ist.

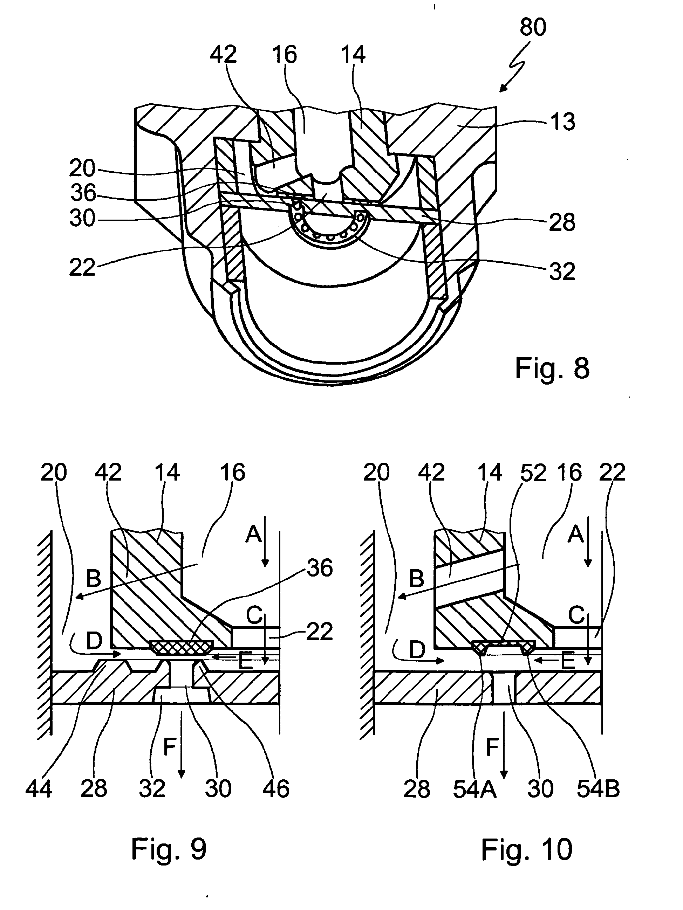

In Figur 8 ist ein Gasventil 80 dargestellt, das im wesentlichen demjenigen nach Figur 1 entspricht. Das Gasventil 80 unterscheidet sich von dem Gasventil nach Figur 6 jedoch durch die Ausbildung des Ventilschließglieds 14, und zwar dadurch, daß es nicht mit radial ausgerichteten Abströmbohrungen versehen ist, sondern neben der axialen Abströmbohrung 22 winklig gegenüber der Längsachse des Ventilschließglieds 14 ausgerichtete Abströmbohrungen 42 aufweist, die zu dem äußeren Druckbereich 20 führen, was ein optimiertes Strömungsverhalten des betreffenden Gases bewirkt.

Der Dichtbereich des Gasventils 80 ist in Figur 9 detailliert dargestellt. Er zeichnet sich dadurch aus, daß die Düsenplatte 28 einen gegebenenfalls ringförmigen Sockel 44 aufweist, der als Anschlag für das Ventilschließglied 14 dient und im Randbereich des letzteren angeordnet ist.

Des weiteren weist die Düsenplatte 28 an den Düsen 30 jeweils als Dichtlippe dienende Schürzen 46 auf, die bei geschlossenem Ventilschließglied 14 in die ringförmige Elastomerdichtung 36 eingreifen, die in einer Ringnut des Ventilschließglieds 14 eingebettet ist. Zur Optimierung der Strömungsbedingungen sind die Kanten der Elastomerdichtung 36 angeschrägt und die Einströmkanten der Düsen 30 mit einem Krümmungsradius von etwa 0,05 mm abgerundet.

Die Strömung des betreffenden Gases in dem Gasventil 80 ist ebenfalls Figur 9 zu entnehmen. Das Gas strömt von der Zuströmseite gemäß einem Pfeil A durch die erste Axialbohrung 16 des Ventilschließglieds 14 und von dort zum einen durch die Abströmkanäle 42 gemäß einem Pfeil B in den äußeren Druckbereich 20 und zum anderen gemäß einem Pfeil C durch die zweite Axialbohrung 22, die Teil des inneren Druckbereichs ist. Beim Öffnen des Ventilschließglieds 14 strömt Gas aus dem äußeren Druckbereich 20 gemäß einem Pfeil D und aus dem inneren Druckbereich gemäß einem Pfeil E zu den Düsen 30 und über diese gemäß einem Pfeil F zu der Abströmseite des Gasventils 80. Diese Strömungswege entsprechen im wesentlichen den Strömungswegen des Kraftstoffs bei den in den Figuren 1 bis 3 dargestellten Kraftstoffeinspritzventilen.

In Figur 10 ist eine alternative Ausführungsform eines Dichtbereichs bei einem Gasventil der in Figur 8 dargestellten Art gezeigt. Der Dichtbereich nach Figur 10 unterscheidet sich von demjenigen nach Figur 9 dadurch, daß er einen Dichtring 52 aufweist, der mit zwei Dichtlippen 54A und 54B versehen ist, die am inneren bzw. am äußeren Rand des Dichtrings 52 angeordnet sind. Die Dichtlippen 54A und 54B greifen bei geschlossenem Ventilschließglied 14 an der Dichtplatte 28 an, die hier ohne Anschlagsockel sowie ohne Schürzen ausgebildet ist.

## Patentansprüche

1. Ventil zum Steuern eines Fluids, insbesondere mit elektromagnetischer Betätigung, umfassend ein Ventilschließglied (14), das einen Fluidstrom von einer Zuströmseite (11) zu einer Abströmseite (12) steuert und mit einem als Flachsitz ausgebildeten Ventilsitz (26) zusammenwirkt, der an einer Ventilplatte (28) ausgebildet ist, wobei an der Ventilplatte (28) Düsen (30) ausgebildet sind, die zu der Abströmseite (12) führen und die mittels des Ventilschließglieds (14) verschließbar sind, wobei die Zuströmseite stromab mit einem inneren (22) und einem äußeren (20) Druckbereich verbunden ist, welche Druckbereiche (20, 22) stromauf des Ventilsitzes (26) angeordnet sind, wobei der innere Druckbereich (22) einen axialen Druckkanal des Ventilschließglieds (14) umfasst, der an der freien Stirnseite (24) des Ventilschließglieds (14) austritt, und der äußere Druckbereich (20) das Ventilschließglied (14) umgibt, **dadurch gekennzeichnet,**
**dass** stromaufwärts des inneren axialen Druckkanals eine. Axialbohrung (16) in dem Ventilschließglied 14 vorgesehen ist von der aus Radialbohrungen (18, 42) abzweigen, die zu dem äußeren Druckbereich (20) führen und dass an der Dichtfläche des Ventilschließglieds (14) mindestens ein Dichtelement (36, 52) angeordnet ist.

2. Ventil nach Anspruch 1,
**dadurch gekennzeichnet, dass** die Düsen (30) entlang einer Kreislinie angeordnet sind.

3. Ventil nach Anspruch 1 oder 2,
**dadurch gekennzeichnet, dass** die Düsen (30) mit einer abgerundeten Einströmkante (61) oder mit einer scharfen Einströmkante (58) versehen sind.

4. Ventil nach Anspruch 1 oder 2,
**dadurch gekennzeichnet, dass** die Düsen (30) eine scharfe Einströmkante (58) haben und sich in Abströmrichtung aufweiten, wobei die Wandung (59) der Düsen (30) einen gewölbten Längsschnitt hat.

5. Ventil nach einem der Ansprüche 1 bis 4,
**dadurch gekennzeichnet, dass** die Düsen (30) in einen Ringkanal (32) münden, der an der dem Ventilschließglied (14) abgewandten Seite der Ventilplatte (28) angeordnet ist.

6. Ventil nach Anspruch 5,
**dadurch gekennzeichnet, dass** der Ringkanal (32) mit einer Breite versehen ist, die etwa das zwei- bis dreifache des Düsendurchmessers beträgt.

7. Ventil nach einem der Ansprüche 1 bis 6,
**dadurch gekennzeichnet, dass** das Ventilschließglied (14) stirnseitig eine als Ringfläche ausgebildete Dichtfläche aufweist, die mit den Düsen (30) zusammenwirkt.

8. Ventil nach Anspruch 1,
**dadurch gekennzeichnet, dass** der innere Druckbereich (22) über mindestens einen, vorzugsweise über vier in dem Ventilschließglied (14) ausgebildete Abströmkanäle (18A, 18B, 18C; 42) mit dem äußeren Druckbereich (20) verbunden ist.

9. Ventil nach Anspruch 1,
**dadurch gekennzeichnet, dass** das Dichtelement (52) mindestens eine Dichtlippe (54, 55) aufweist.

10. Ventil nach einem der Ansprüche 1 bis 9, **gekennzeichnet durch** einen als Anschlag für den Ventilschließkörper (14) dienenden Sockel (44).

11. Ventil nach Anspruch 1,
**dadurch gekennzeichnet, dass** an der Dichtplatte (28) Schürzen (46) zum Eingriff in das Dichtelement (36) ausgebildet sind.

## Claims

1. Valve for controlling a fluid, in particular by means of electromagnetic actuation, comprising a valve-closing member (14) which controls a fluid stream from an inflow side (11) to an outflow side (12) and cooperates with a valve seat (26) which is designed as a flat seat and is formed on a valve plate (28), the valve plate (28) having formed on it nozzles (30) which lead to the outflow side (12) and are closable by means of the valve-closing member (14), the inflow side being connected downstream to an inner (22) and an outer (20) pressure region, which pressure regions (20, 22) are arranged upstream of the valve seat (26), the inner pressure region (22) comprising an axial pressure duct of the valve-closing member (14) which axial pressure duct emerges on the free end face (24) of the valve-closing member (14), and the outer pressure region (20) surrounding the valve-closing member (14), **characterized in that** the valve-closing member (14) has provided in it, upstream of the inner axial pressure duct, an axial bore (16), from which radial bores (18, 42) leading to the outer pressure region (20) branch off, and **in that** at least one sealing element (36, 52) is arranged on the sealing face of the valve-closing member (14).

2. Valve according to Claim 1, **characterized in that** the nozzles (30) are arranged along a circular line.

3. Valve according to Claim 1 or 2, **characterized in that** the nozzles (30) are provided with a rounded inflow edge (61) or with a sharp inflow edge (58).

4. Valve according to Claim 1 or 2, **characterized in that** the nozzles (30) have a sharp inflow edge (58) and widen in the outflow direction, the wall (59) of the nozzles (30) having a curved longitudinal section.

5. Valve according to one of Claims 1 to 4,
**characterized in that** the nozzles (30) issue into a ring duct (32) which is arranged on that side of the valve plate (28) which faces away from the valve-closing member (14).

6. Valve according to Claim 5, **characterized in that** the ring duct (32) is provided with a width which amounts to approximately twice to three times the nozzle diameter.

7. Valve according to one of Claims 1 to 6,
**characterized in that** the valve-closing member (14) has on the end face a sealing face which is designed as a ring face and which cooperates with the nozzles (30).

8. Valve according to Claim 1, **characterized in that** the inner pressure region (22) is connected to the outer pressure region (20) via at least one, preferably via four outflow ducts (18A, 18B, 18C; 42) formed in the valve-closing member (14).

9. Valve according to Claim 1, **characterized in that** the sealing element (52) has at least one sealing lip (54, 55).

10. Valve according to one of Claims 1 to 9,
**characterized by** a plinth (44) serving as a stop for the valve-closing member (14).

11. Valve according to Claim 1, **characterized in that** skirts (46) for engagement into the sealing element (36) are formed on the sealing plate (28).

## Revendications

1. Soupape de commande d'un fluide, en particulier à commande électromagnétique, comprenant un organe de fermeture de soupape (14), qui commande un courant de fluide depuis un côté d'afflux (11) jusqu'à un côté de sortie (12), et qui coopère avec un siège de soupape (26) réalisé sous forme de siège plat, qui est réalisé sur une plaque de soupape (28), des buses (30) étant réalisées sur la plaque de soupape (28), lesquelles conduisent au côté de sortie (12) et peuvent être fermées au moyen de l'organe de fermeture de soupape (14), le côté d'afflux étant connecté en aval à une région de pression intérieure (22) et extérieure (20), lesquelles régions de pression (20, 22) sont disposées en amont du siège de soupape (26), la région de pression intérieure (22) comprenant un canal de pression axial de l'organe de fermeture de soupape (14), qui sort au niveau du côté frontal libre (24) de l'organe de fermeture de soupape (14), et la région de pression extérieure (20) entourant l'organe de fermeture de soupape (14),
**caractérisée en ce que**
en aval du canal de pression axial intérieur, un alésage axial (16) est prévu dans l'organe de fermeture de soupape (14), duquel partent des alésages radiaux (18, 42), qui conduisent à la région de pression extérieure (20) et **en ce qu'**au moins un élément d'étanchéité (36, 52) est disposé sur la surface d'étanchéité de l'organe de fermeture de soupape (14).

2. Soupape selon la revendication 1,
**caractérisée en ce que** les buses (30) sont disposées le long d'une ligne circulaire.

3. Soupape selon la revendication 1 ou 2,
**caractérisée en ce que** les buses (30) sont pourvues d'une arête d'afflux arrondie (61) ou d'une arête d'afflux pointue (58).

4. Soupape selon la revendication 1 ou 2,
**caractérisée en ce que** les buses (30) ont une arête d'afflux pointue (58) et s'élargissent dans la direction de la sortie de l'écoulement, la paroi (59) des buses (30) ayant une coupe longitudinale cintrée.

5. Soupape selon l'une quelconque des revendications 1 à 4,
**caractérisée en ce que** les buses (30) débouchent dans un canal annulaire (32) qui est disposé du côté de la plaque de soupape (28) opposé à l'organe de fermeture de soupape (14).

6. Soupape selon la revendication 5,
**caractérisée en ce que** le canal annulaire (32) a une largeur qui représente approximativement deux à trois fois le diamètre de la buse.

7. Soupape selon l'une quelconque des revendications 1 à 6,
**caractérisée en ce que** l'organe de fermeture de soupape (14) présente du côté frontal une surface d'étanchéité réalisée sous forme de surface annulaire qui coopère avec les buses (30).

8. Soupape selon la revendication 1,
**caractérisée en ce que** la région de pression intérieure (22) est connectée à la région de pression extérieure (20) par le biais d'au moins un, de préférence quatre, canaux de sortie (18A, 18B, 18C ; 42) réalisés dans l'organe de fermeture de soupape (14).

9. Soupape selon la revendication 1,
**caractérisée en ce que** l'élément d'étanchéité (52) présente au moins une lèvre d'étanchéité (54, 55).

10. Soupape selon l'une quelconque des revendications 1 à 9,
**caractérisée par** un socle (44) servant de butée pour le corps de fermeture de soupape (14).

11. Soupape selon la revendication 1,
**caractérisée en ce que** des jupes (46) sont réalisées sur la plaque d'étanchéité (28) pour l'engagement dans l'élément d'étanchéité (36).
